# EUROPÄISCHE PATENTSCHRIFT

(11) **EP 0 552 160 B1**
(45) Veröffentlichungstag und Bekanntmachung des Hinweises auf die Patenterteilung: **07.09.1994**
(21) Anmeldenummer: 91913812.3
(22) Anmeldetag: 26.07.1991
(51) Int. Cl.: B60N 2/00

(54) **SICHERHEITSEINRICHTUNG IN EINEM FAHRZEUG**
VEHICLE SAFETY DEVICE
DISPOSITIF DE SECURITE POUR VEHICULES

(30) Priorität: 12.10.1990 DE 4032385
(43) Veröffentlichungstag der Anmeldung: 28.07.1993
(73) Patentinhaber: AUDI AG, 85002 Ingolstadt (DE)
(72) Erfinder: VOLLMER, Elmar, D-8071 Wettstetten (DE)
(74) Vertreter: Engelhardt, Harald
(86) Internationale Anmeldenummer: EP9101401
(87) Internationale Veröffentlichungsnummer: WO9206861

(56) Entgegenhaltungen:
- FR-A- 1 604 358
- FR-A- 2 237 452
- FR-A- 2 261 158
- US-A- 4 154 472

## Beschreibung

Die Erfindung betrifft eine Sicherheitseinrichtung in einem Fahrzeug nach dem Oberbegriff des Anspruchs 1.

Bei einem Unfall mit Frontalaufprall wird ein Fahrzeuginsasse nach vorne beschleunigt. Die Verletzungsgefahr wird durch ein hochliegendes Abstützniveau der Vorderkante des Sitzkissens verringert. Insbesondere wird damit auch die Rückhaltewirkung eines Sicherheitsgurts wesentlich verbessert und ein Durchtauchen des angegurteten Insassen nach unten verhindert. Aus Sitzkomfortgründen kann jedoch dieses Niveau im normalen Fahrbetrieb nicht in die unfalltechnisch günstige, hohe Position gelegt werden.

Es ist bereits bekannt (FR-PS 1 012 718), einen Fahrzeugsitz bei einem Frontalaufprall um eine Fahrzeugquerachse nach hinten zu kippen. Diese Kippbewegung wird über eine Schubstange durchgeführt, die im Bereich der vorderen Stoßstange endet und die bei einem Frontalaufprall in die Fahrgastzelle hineinbewegt wird. Eine in die Fahrgastzelle bei einem Frontalaufprall eindringende Schubstange ist jedoch aus anderen sicherheitstechnischen Überlegungen ungünstig und die Betätigung ist wegen der Gefahr der Verbiegung und des Verklemmens der Schubstange unsicher.

In einer weiteren bekannten Anordnung (DE-PS 36 31 881) wird bei einem Frontalaufprall ebenfalls die Sitzvorderkante eines Fahrzeugsitzes so versteift, daß sie sich nicht eindrücken läßt. Dazu wird ein Spreizgetriebe verwendet, das mit Hilfe eines pyrotechnischen Linearantriebs oder pyrotechnischen Rotationsantriebs betätigt wird. Angesteuert wird ein solcher Antrieb über einen Beschleunigungssensor, der einen schwereren Frontalaufprall ermittelt. Eine solche Ausführung mit Beschleunigungssensor, pyrotechnischem Antrieb, der erforderlichen Verkabelung und gegebenenfalls redundanten Elementen ist aufwendig und teuer.

In einer weiteren bekannten Anordnung (DE-OS 33 37 232) wird die Vorderkante eines Fahrzeugsitzes bei einem Frontalunfall ebenfalls über eine Hebemechanik angehoben, wobei die Hebemechanik unter Nutzung der Aufprallenergie des Fahrzeugs durch Relativbewegungen von Fahrzeugteilen über bewegungsübertragende Mittel betätigt wird. Dazu wird die Relativbewegung zwischen einem im Vorderwagen des Fahrzeugs angeordneten Aggregat, das bei einem Unfall über Deformationsbewegungen in Richtung auf die Fahrgastzelle bewegt wird, und einem weiter hinten angeordneten Bereich der Fahrzeugkarosserie ausgenützt, wobei ein am Aggregat befestigtes Seil über Umlenkrollen mit der Hebemechanik zum Anheben der Vorderkante des Fahrzeugsitzes verbunden ist. Es ist jedoch aufwendig, die Hebemechanik über einen relativ langen Weg mit einem Aggregat im Vorderwagen zu verbinden. Ein weiterer Aufwand besteht darin, eine geeignete Verbindung herzustellen, die sich bei einer Verstellung des Fahrzeugsitzes, entsprechend einer individuellen Sitzposition, in ihrer Wirkstellung mitverstellt.

Weiter ist eine Sicherheitseinrichtung in einem Fahrzeug mit einem Fahrzeugsitz gemäß dem Oberbegriff des Anspruchs 1 bekannt (FR-A-2 261 158), bei dem die Vorderkante zur Verbesserung der Abstützwirkung des Sitzkissens durch Vergrößerung des wirksamen Keilwinkels über eine Hebemechanik anhebbar ist. Die Hebemechanik ist unter Nutzung der Aufprallenergie des Fahrzeugs durch Relativbewegungen von Fahrzeugteilen betätigbar. Die Hebemechanik besteht dabei aus längsverlaufenden Führungsschienen, in denen der rückwärtige Bereich des Sitzkissens längsverschiebbar über Rollen gehalten ist. Zudem ist eine Stütze vorgesehen, die an einer Endseite am Fahrzeugboden und an der anderen Endseite etwa in einem mittleren, unteren Bereich des Sitzkissens angelenkt ist. Die Stütze verläuft in der normalen Betriebsstellung des Fahrzeugsitzes schräg nach oben, wobei der Anlenkpunkt am Fahrzeugboden vor dem Anlenkpunkt am Fahrzeugsitz liegt. Die Anordnung ist durch eine Feder in dieser Stellung gehalten. Bei einem Frontalaufprall wird aufgrund der Massenträgheit des Fahrzeugsitzes und eines darauf sitzenden Insassen das Sitzkissen in der Führungsschiene nach vorne und durch die Stütze nach oben unter Überwindung der Federkraft zur Vergrößerung des wirksamen Keilwinkels bewegt.

Ein gravierender Nachteil dieser Anordnung besteht darin, daß zusätzlich zu der gewünschten Verbesserung der Abstützungwirkung des Sitzkissens die Sitzlehne nach hinten gekippt wird, wodurch deren Abstützwirkung entfällt. Zudem sind die längs-verlaufenden Führungsschienen Bestandteil der Hebemechanik und nicht für eine Sitzverstellung in Längsrichtung zur Anpassung an eine individuelle Sitzposition verwendbar.

Aufgabe der Erfindung ist es, eine gattungsgemäße Sicherheitseinrichtung in einem Fahrzeug so weiterzubilden, daß mit einfachen Mitteln eine Anhebung der Vorderkante eines Fahrzeugsitzes bei einem Frontalaufprall erreicht wird.

Diese Aufgabe wird mit den kennzeichnenden Merkmalen des Anpruchs 1 gelöst.

Gemäß Anspruch 1 ist der Fahrzeugsitz in Längsrichtung verstellbar und durch eine Rasteinrichtung gehalten. Die Rasteinrichtung enthält ein belastungsabhängiges Entriegelungselement, insbesondere ein Sollbruchelement, das bei einer bestimmten Belastung durch Trägheitskräfte auf den Fahrzeugsitz bei einem Aufprall die Rasteinrichtung freigibt, so daß sich der Fahrzeugsitz in Fahrzeuglängsrichtung nach vorne bewegt. Die Betätigung der Hebemechanik durch Relativbewegungen von Fahrzeugteilen erfolgt über ein bewegungsübertragendes Mittel, das mit einem festen Karosserieteil und mit der Hebemechanik am Fahrzeugsitz verbunden ist.

Bei der erfindungsgemäßen Anordnung wird die kinetische Energie des Fahrzeugsitzes gegenüber der bei einem Aufprall abgebremsten Karosserie einerseits zur Freigabe der Rasteinrichtung und anschließend für die Betätigung der Hebemechanik ausgenützt. Das Entriegelungselement wird zweckmäßig so dimensioniert, daß es bei einer Beschleunigung von ca. 5 g die Rasteinrichtung freigibt, wobei diese Schwelle über den üblicherweise auftretenden Betriebsbedingungen liegt.

Da die Hebemechanik am Fahrzeugsitz, zweckmäßig im Sitzkissen, angebracht ist und die Bewegung des Fahrzeugsitzes gegenüber der Karosserie ausgenützt wird, können kurze Wege für die Anbindung der bewegungsübertragenden Mittel verwendet werden, so daß einfache und preisgünstige Konstruktionen möglich sind.

Durch die Anhebung der Vorderkante des Fahrzeugsitzes werden der wirksame Keilwinkel des Sitzkissens bei einem Aufprall vergrößert und damit die Abstützwirkung in Fahrtrichtung verbessert.

Vorteilhaft wird die Längsbewegung des Fahrzeugsitzes nach der Freigabe der Rasteinrichtung, bzw.nach dem Bruch des Sollbruchelements entsprechend Anspruch 2 durch ein Bremselement oder einen Anschlag auf einen vorbestimmten Weg, der für die Betätigung der Hebemechanik ausreichend ist, abgebremst oder begrenzt. Ein Anschlag kann zur Milderung eines abrupten Aufschlags als Dämpfungselement ausgebildet sein.

Um den für eine Verstellung der Hebemechanik vorgegebenen Weg auch bei einer Sitzlängsverstellung beibehalten zu können, wird mit Anspruch 3 vorgeschlagen, das Bremselement oder den Anschlag entsprechend einer Sitzlängsverstellung mitzuverstellen. Es versteht sich, daß die Rasteinrichtung für die Sitzhalterung das Entriegelungselement oder Sollbruchelement enthält, jedoch eine Rasteinrichtung für das Bremselement bzw.den Anschlag stärker dimensioniert sein soll. Zweckmäßig ist eine entsprechende Verstelleinrichtung mit der Sitzlängsverstellung gekoppelt und wird zusammen mit dieser mit nur einem Handgriff betätigt.

Als bewegungsübertragendes Mittel wird nach Anspruch 4 vorteilhaft ein Seilzug verwendet, der die Relativbewegungen mitmacht und auch einfach umgelenkt werden kann. Grundsätzlich sind jedoch auch andere bewegungsübertragende Mittel, beispielsweise Gestängeanordnungen mit Gelenken möglich.

Zur besseren Anpassung der Bewegung, des Verstellwegs und der Angriffsrichtung an die Hebemechanik wird mit Anspruch 5 vorgeschlagen, den Seilzug über wenigstens eine Umlenkrolle im Fahrzeugsitz zu führen.

Bei üblichen Fahrzeugsitzen ist deren vorderer Bereich meist als überhöhter Wulst zur Untersützung der Kniekehlen ausgeführt. Mit Anspruch 6 wird vorgeschlagen, diesen Teil als nach oben schwenkbaren Sitzkissenteil auszuführen. Zur Realisierung der Schwenkbewegung soll der Seilzug mit einem Schwenkhebel am Sitzkissenteil, gegebenenfalls über eine oder mehrere Umlenkrollen, verbunden werden.

Ein günstiger, kurzer Weg für die bewegungsübertragenden Mittel, wo diese weder sichtbar noch sonst störend sind, ergibt sich nach Anspruch 7 dadurch, daß eine Verankerung, insbesondere für einen Seilzug, unter dem Fahrzeugsitz am Fahrzeugboden oder an einer Sitzschiene vorgesehen ist.

Ähnlich wie bei dem vorbeschriebenen Anschlag ist es auch hier erforderlich, die Verankerung bei einer Sitzlängsverstellung gemäß Anspruch 8 um den gleichen Weg mitzuverstellen. Zudem ist es auch hier notwendig, die Verstelleinrichtung und die Verankerung gegenüber dem Sollbruchelement stärker zu dimensionieren, da in der Verankerung die Gegenkraft für die Hebemechanik abgestützt wird.

Anhand einer Zeichnung wird ein Ausführungsbeispiel mit weiteren Merkmalen, Einzelheiten und Vorteilen näher erläutert.

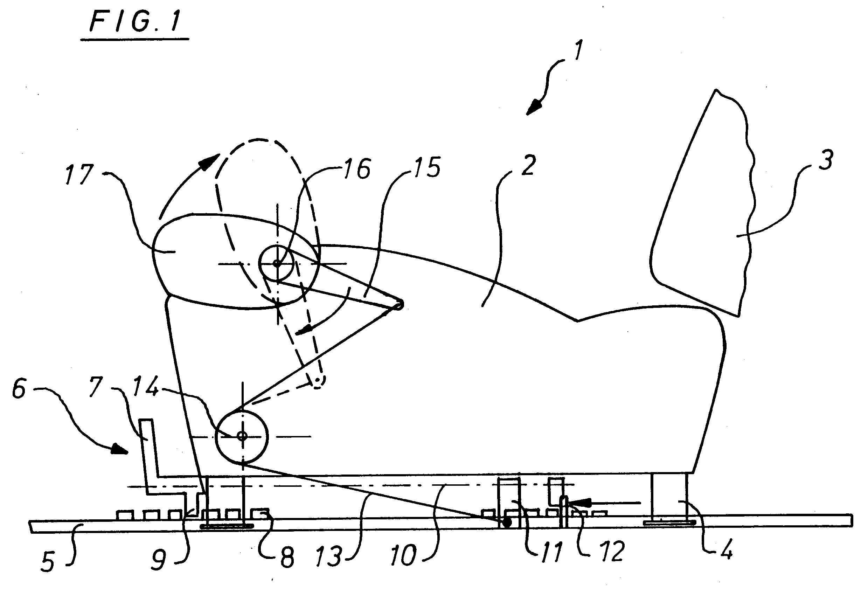

In der einzigen Figur ist ein Fahrzeugsitz 1 mit einem Sitzkissen 2 und einer Rückenlehne 3 schematisch dargestellt.

Der Fahrzeugsitz 1 ist über Halterungen 4 in Sitzschienen 5 in Längsrichtung verschiebbar gehalten. Mit dem Bezugszeichen 6 ist eine schematisch dargestellte Rasteinrichtung mit einem Handgriff 7 gezeigt, mit der der Fahrzeugsitz 1 entlang einer Verzahnung 8 in Längsrichtung fixierbar ist.

Die Rasteinrichtung 6 für die Längsverstellung enthält ein schematisch angedeutetes Sollbruchelement 9, das bei einer Belastung von mehr als 5 g bricht und den Fahrzeugsitz 1 für eine Längsverschiebung in Fahrtrichtung bei einem entsprechend starken Aufprall freigibt.

Mit dem Handgriff 7 wird gekoppelt und um den gleichen Weg, entsprechend der Längsverstellung des Fahrzeugsitzes (dargestellt durch die Wirklinie 10), eine Verankerung 11 und ein Anschlag 12 verstellt.

Mit der Verankerung 11, die genauso wie der Anschlag 12, bei einem Aufprall und bei einer Freigabe des Fahrzeugsitzes über das Sollbruchelement 9, ortsfest gehalten werden, ist ein Seilzug 13 verbunden. Dieser ist über eine Rolle 14 innerhalb des Sitzkissens 2 geführt und mit dem Ende eines Schwenkhebels 15 verbunden.

Der Schwenkhebel 15 ist Teil eines nach oben um eine Fahrzeugquerachse 16 schwenkbaren Sitzkissenteils 17 im Bereich der Vorderkante des Sitzkissens 2.

Die dargestellte Sicherheitseinrichtung hat folgende Funktion: Bei einem schwereren Frontalaufprall bricht das Sollbruchelement 9 und gibt den Weg für den Fahrzeugsitz 1, entsprechend seiner Trägheitskraft und kinetischen Energie, für eine Verschiebung nach vorne bis zum Anschlag 12 frei. Der Seilzug 13 wird bei dieser Bewegung mit einem Ende an der Verankerung 11 ortsfest gehalten. Durch die Relativbewegung zwischen Fahrzeugsitz 2 und Verankerung 11 zieht der Seilzug 13 den Schwenkhebel 15 nach unten in die strichliert gezeichnete Position, wodurch das mit dem Schwenkhebel 15 fest verbundene Sitzkissenteil 17 nach oben in die strichliert gezeichnete Lage geklappt wird.

Somit wird bei einem Frontalaufprall die Vorderkante des Sitzkissens 2 bzw. das Sitzkissenteil 17 zur Verbesserung der Abstützwirkung und zur Vergößerung des wirksamen Keilwinkels angehoben, wodurch insbesondere die Gefahr des sog. "Abtauchens" bei angelegten Sicherheitsgurten verringert wird.

Bei nicht angelegtem Gurt kann in Verbindung mit einem Airbag-System auf die sonst üblichen Kniefänger an der Schalttafel verzichtet werden. Die Verletzungsgefahr wird hierdurch reduziert und die Schalttafel kann mit erheblichen Funktions- und Kostenvorteilen gestaltet werden.

## Patentansprüche

1. Sicherheitseinrichtung in einem Fahrzeug, mit wenigstens einem Fahrzeugsitz (1), bei dem die Vorderkante zur Verbesserung der Abstützwirkung des Sitzkissens durch Vergrößerung des wirksamen Keilwinkels über eine Hebemechanik (15) anhebbar ist, wobei die Hebemechanik (15) unter Nutzung der Aufprallenergie des Fahrzeugs, insbesondere bei einem Frontalaufprall, durch Relativbewegungen von Fahrzeugteilen betätigbar ist, und wobei der Fahrzeugsitz durch eine Rasteinrichtung (6) gehalten ist, wobei die Rasteinrichtung (6) ein belastungsabhängiges Entriegelungselement enthält, das bei einer bestimmten Belastung durch Trägheitskräfte auf den Fahrzeugsitz (1) bei einem Aufprall die Rasteinrichtung (6) freigibt, so daß sich der Fahrzeugsitz (1) in Fahrzeuglängsrichtung nach vorne bewegt,
dadurch gekennzeichnet,
daß der Fahrzeugsitz (1) in Längsrichtung verstellbar ist und
daß die Betätigung der Hebemechanik (15) über ein bewegungsübertragendes Mittel (13), das mit einem festen Karosserieteil (11) und mit der Hebemechanik (15) am Fahrzeugsitz (1) verbunden ist, erfolgt.

2. Sicherheitseinrichtung nach Anspruch 1, dadurch gekennzeichnet, daß das belastungsabhängige Entriegelungselement ein Sollbruchelement (9) ist, und daß die Längsbewegung des Fahrzeugsitzes (1) nach dem Bruch des Sollbruchelements (9) durch ein Bremselement gebremst und/oder als Anschlag (12) auf einen vorbestimmten Weg begrenzt wird.

3. Sicherheitseinrichtung nach Anspruch 2, dadurch gekennzeichnet, daß das Bremselement (Anschlag 12) bei einer üblichen Sitzlängsverstellung zusammen mit dem Fahrzeugsitz (1) unter Beibehaltung des vorbestimmten Weges ebenfalls verstellbar ist.

4. Sicherheitseinrichtung nach einem der Ansprüche 1 bis 3, dadurch gekennzeichnet, daß als bewegungsübertragendes Mittel ein Seilzug (13) verwendet ist.

5. Sicherheitseinrichtung nach Anspruch 4, dadurch gekennzeichnet, daß der Seilzug (13) über wenigstens eine Umlenkrolle (14) im Fahrzeugsitz geführt ist.

6. Sicherheitseinrichtung nach Anspruch 4, dadurch gekennzeichnet, daß die Vorderkante des Fahrzeugsitzes als nach oben schwenkbares Sitzkissenteil (17) ausgeführt ist und der Seilzug (13) mit einem Schwenkhebel (15) am Sitzkissenteil (17) verbunden ist.

7. Sicherheitseinrichtung nach einem der Ansprüche 1 bis 6, dadurch gekennzeichnet, daß die bewegungsübertragenden Mittel, insbesondere der Seilzug (13), unterhalb des Fahrzeugsitzes (1) mit einer Verankerung (11) verbunden sind.

8. Sicherheitseinrichtung nach Anspruch 7, dadurch gekennzeichnet, daß bei einer üblichen Sitzlängsverstellung zusammen mit dem Fahrzeugsitz (1) über eine mechanische Verbindung auch die Verankerung (11) um den gleichen Weg verstellt wird.

## Claims

1. Safety device in a vehicle, comprising at least one vehicle seat (1) on which the front edge is adapted to be raised via a lifting mechanism (15) to improve the support provided by the seat cushion by increasing the effective wedge angle, said lifting mechanism (15) being adapted to be operated by relative movements of parts of the vehicle, using the vehicle's impact energy, particularly in a frontal impact, and the vehicle seat (1) being held by a latching device (6) which contains a load-dependent unlocking element which in the event of an impact releases the latching device (6) in the event of a given load due to inertial forces on the vehicle seat (1), thereby moving the vehicle seat (1) forwards in the longitudinal direction of the vehicle, characterised in that the vehicle seat (1) is longitudinally adjustable and that the operation of the lifting mechanism (15) takes place via a motion-transmitting means (13) which is connected to a fixed bodyshell part (11) and to the lifting mechanism (15) at the vehicle seat (1).

2. Safety device according to claim 1, characterised in that the load-dependent unlocking mechanism is a rated breaking element (9), that the longitudinal movement of the vehicle seat (1) is braked by a braking element after the rated breaking element (9) has broken and/or is limited as a stop (12) to a predetermined travel distance.

3. Safety device according to claim 2, characterised in that the braking element (stop 12) is likewise adjustable during normal longitudinal seat adjustment together with the vehicle seat (1), maintaining the predetermined travel distance.

4. Safety device according to any of claims 1 to 3, characterised in that a cable (13) is used as the motion-transmitting means.

5. Safety device according to claim 4, characterised in that the cable (13) passes around at least one guide pulley (14) in the vehicle seat.

6. Safety device according to claim 4, characterised in that the front edge of the vehicle seat is configured as an upward-swivelling seat cushion component (17) and the cable (13) is connected to a swivelling lever (15) on the seat cushion component (17).

7. Safety device according to any of claims 1 to 6, characterised in that the motion-transmitting means, in particular the cable (13), are connected beneath the vehicle seat (1) to an anchorage (11).

8. Safety device according to claim 7, characterised in that in normal longitudinal seat adjustment the anchorage (11) is also adjusted together with the vehicle seat (1) by the same distance via a mechanical connection.

## Revendications

1. Dispositif de sécurité dans un véhicule automobile, comprenant au moins un siège de voiture (1) dont le bord avant peut être relevé au moyen d'un mécanisme élévateur (15) afin d'améliorer l'effet de retenue du coussin de siège par accentuation de l'angle de calage efficace, le mécanisme élévateur pouvant être actionné en mettant à profit l'énergie d'impact du véhicule, en particulier en cas de collision frontale, par des déplacements relatifs de parties du véhicule, et le siège de voiture étant maintenu par un dispositif à crans d'arrêt (6), le dispositif à crans d'arrêt (6) comprenant un élément de déverrouillage dépendant de la charge qui, pour une charge déterminée due aux forces d'inertie s'exerçant sur le siège de voiture (1) en cas de collision, libère le dispositif à crans d'arrêt (6), de sorte que le siège de voiture (1) se déplace vers l'avant dans la direction longitudinale du véhicule, caractérisé en ce que le siège de voiture (1) est réglable dans le sens longitudinal et en ce que l'actionnement du mécanisme élévateur (15) s'effectue par l'intermédiaire d'un moyen (13) de transmission du mouvement qui est raccordé à un élément fixe (11) de la carrosserie et au mécanisme élévateur (15) sur le siège de voiture (1).

2. Dispositif de sécurité selon la revendication 1, caractérisé en ce que l'élément de déverrouillage dépendant de la charge est un élément (9) destiné à la rupture et en ce que le mouvement longitudinal du siège de voiture (1) est freiné, après la rupture de l'élément (9) destiné à la rupture, par un élément de freinage et/ou est limité à une course prédéterminée par une butée (12).

3. Dispositif de sécurité selon la revendication 2, caractérisé en ce que, lors d'un réglage longitudinal normal du siège, l'élément de freinage (butée 12) est également réglable en même temps que le siège de voiture (1) sans que soit modifiée la course prédéterminée.

4. Dispositif de sécurité selon l'une quelconque des revendications 1 à 3, caractérisé en ce qu'un câble de traction (13) est utilisé comme moyen de transmission du mouvement.

5. Dispositif de sécurité selon la revendication 4, caractérisé en ce que le câble de traction (13) est guidé par au moins une poulie de renvoi (14) dans le siège de la voiture.

6. Dispositif de sécurité selon la revendication 4, caractérisé en ce que le bord avant du siège de voiture est réalisé sous forme de partie (17) du coussin de siège pouvant pivoter vers le haut, et en ce que le câble de traction (13) est raccordé à un levier pivotant (15) au niveau de cette partie (17) du coussin de siège.

7. Dispositif de sécurité selon l'une quelconque des revendications 1 à 6, caractérisé en ce que le moyen de transmission du mouvement, en particulier le câble de traction (13), est raccordé à un point d'ancrage (11) au-dessous du siège de voiture (1).

8. Dispositif de sécurité selon la revendication 7, caractérisé en ce que, lors d'un réglage longitudinal normal du siège, le point d'ancrage (11) est également déplacé, en même temps que le siège de voiture (1) et dans la même mesure, au moyen d'une liaison mécanique.
